(19) Europäisches Patentamt
European Patent Office
Office européen des brevets

(11) EP 4 625 773 A1

(12) **EUROPEAN PATENT APPLICATION**
published in accordance with Art. 153(4) EPC

(43) Date of publication:
01.10.2025 Bulletin 2025/40

(21) Application number: 23894256.9

(22) Date of filing: 27.09.2023

(51) International Patent Classification (IPC):
H02K 3/46 (2006.01)     H02K 11/20 (2016.01)

(52) Cooperative Patent Classification (CPC):
H02K 3/46; H02K 11/20

(86) International application number:
PCT/JP2023/035257

(87) International publication number:
WO 2024/111244 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.11.2022 JP 2022186731

(71) Applicant: Panasonic Intellectual Property
Management Co., Ltd.
Kadoma-shi, Osaka 571-0057 (JP)

(72) Inventors:
• YOSHIOKA, Yuuki
Osaka 571-0057 (JP)
• NANBU, Yasuo
Osaka 571-0057 (JP)

(74) Representative: SSM Sandmair
Patentanwälte Rechtsanwalt
Partnerschaft mbB
Joseph-Wild-Straße 20
81829 München (DE)

(54) **STATOR AND MOTOR**

(57) A stator includes a stator core, a coil formed by winding an electric wire around the stator core, and a terminal electrically connected to the electric wire, wherein the terminal includes a first portion through which a current flows and a second portion formed by reducing a sectional area of a part of the terminal in a direction in which the current flows, and second Joule heat is larger than first Joule heat, and third Joule heat is smaller than the first Joule heat, where the first Joule heat is Joule heat generated in the electric wire when the current flows through the electric wire, the second Joule heat is Joule heat generated in the first portion when the current flows through the first portion, and the third Joule heat is Joule heat generated in the second portion when the current flows through the second portion.

FIG. 1

**Description**

TECHNICAL FIELD

The present disclosure relates to a stator and a motor including the stator.

BACKGROUND ART

Motors are used in various electric appliances such as household appliances and industrial appliances. For example, a motor is used as a fan motor mounted on an outdoor unit of an air conditioner. The fan motor includes a motor having a stator and a rotor, and a rotary fan attached to a rotary shaft of the motor.

As the motor used in the fan motor, there has been known a molded motor in which a stator is covered with molded resin. The molded motor includes, for example, a stator having a stator core and a coil (stator coil) wound around the stator core, a rotor that rotates with magnetic force of the stator, and molded resin that covers the stator.

This type of motor requires high safety. For example, there is a demand for a motor that safely stops without igniting from the inside of the motor when an abnormal current flows under a special environment where all protective devices are stopped. Thus, there has been proposed a motor having a structure in which an electric wire constituting a stator is thinned, and the electric wire fuses and disconnects with self-generated heat when an abnormal current such as an overcurrent flows. This disconnection of the electric wire cuts off the current. This can stop the motor before the motor ignites from the inside of the motor.

In recent years, it has been required to improve the performance of a motor while maintaining its safety. Specifically, as one of the performances of the motor, it is required to improve the efficiency of the motor. To improve the efficiency of the motor, it is conceivable to thicken the electric wire constituting the stator coil. However, when the electric wire is thickened, Joule heat required for fusing the electric wire increases. Thus, there is a concern that the motor ignites before the electric wire fuses with self-generated heat.

Accordingly, there has conventionally been proposed a motor capable of safely cutting off an abnormal current when the abnormal current flows (see, for example, PTL 1). In the motor disclosed in PTL 1, as a disconnection promotion part that promotes disconnection of an electric wire constituting a stator coil, a member or the like that becomes liquid at a high temperature is provided at a crossover wire part or the like between coils.

However, the motor disclosed in PTL 1 uses a special separate member such as a member that becomes liquid at high temperature. Thus, there are problems in securing members, production efficiency, and the like, and mass productivity is poor.

As described above, in conventional motors, it is difficult to ensure mass productivity while achieving both safety and high efficiency.

Citation List

Patent Literature

PTL 1: International Publication No. WO 2018/150845

SUMMARY OF THE INVENTION

An object of the present disclosure is to provide a stator and a motor capable of improving mass productivity of the motor while achieving both the safety and high efficiency of the motor.

To achieve the above object, one aspect of a stator according to the present disclosure includes a stator core, a coil formed by winding an electric wire around the stator core, and a terminal electrically connected to the electric wire, wherein the terminal includes a first portion through which a current flows and a second portion formed by reducing a sectional area of a part of the terminal in a direction in which the current flows, and second Joule heat is larger than first Joule heat, and third Joule heat is smaller than the first Joule heat, where the first Joule heat is Joule heat generated in the electric wire when the current flows through the electric wire, the second Joule heat is Joule heat generated in the first portion when the current flows through the first portion, and the third Joule heat is Joule heat generated in the second portion when the current flows through the second portion.

The second portion preferably has a sectional area smaller than a sectional area of the first portion.

The terminal may include a branch in which a current path is branched by a through hole formed in the terminal, and the second portion may be the branch.

The terminal may include a cutout formed by cutting out a part of an outer edge of the terminal, and a narrow part partially narrowed in width by forming the cutout, and the second portion may be the narrow part.

The terminal may include a thin-walled part having a thickness smaller than a thickness of the first portion, and the second portion may be the thin-walled part.

A conductive material constituting the terminal preferably has an electrical conductivity smaller than an electrical conductivity of a conductive material constituting the electric wire.

The terminal may include a first connecting part to which a first electric wire is connected, a second connecting part to which a second electric wire is connected, and a main body serving as a current path between the first connecting part and the second connecting part, the second portion may be a portion of the main body, and the first portion may be a portion other than the second portion in the main body, the first connecting part or the second connecting part.

The stator may further include an insulator having a portion interposed between the stator core and the coil, wherein the terminal may include a fixture part fixed to the insulator, and the fixture part may be a portion different from the main body.

One of the first electric wire and the second electric wire may be an electric wire constituting the coil.

The other of the first electric wire and the second electric wire may be a lead wire connected to a circuit board. One aspect of a motor according to the present disclosure includes the stator described above and a rotor that rotates with a magnetic force generated in the stator.

According to the present disclosure, a motor having excellent mass productivity while achieving both safety and high efficiency can be realized.

BRIEF DESCRIPTION OF THE DRAWINGS

Fig. 1 is a perspective view of a motor according to an exemplary embodiment.
Fig. 2 is an exploded perspective view of the motor according to the exemplary embodiment.
Fig. 3 is a half sectional view of the motor according to the exemplary embodiment.
Fig. 4 is a sectional view of the motor according to the exemplary embodiment taken along line IV-IV in Fig. 3.
Fig. 5 is a perspective view of a stator in the motor according to the exemplary embodiment.
Fig. 6 is an enlarged perspective view illustrating a configuration of a part of the stator according to the exemplary embodiment.
Fig. 7 is a perspective view of a terminal of Example 1 used in the stator according to the exemplary embodiment.
Fig. 8 is a front view of the terminal of Example 1 used in the stator according to the exemplary embodiment.
Fig. 9 is a perspective view of a terminal of Example 2 used in the stator according to the exemplary embodiment.
Fig. 10 is a front view of the terminal of Example 2 used in the stator according to the exemplary embodiment.
Fig. 11 is a perspective view of a terminal of a comparative example.
Fig. 12 is a front view of the terminal of the comparative example.
Fig. 13 is a diagram illustrating a result of comparison between the terminal of the comparative example, the terminal of Example 1, and the terminal of Example 2.
Fig. 14 is a diagram for describing an experimental method for comparing the stiffness between the terminal of the comparative example, the terminal of Example 1, and the terminal of Example 2.
Fig. 15 is a diagram illustrating an experimental result when the stiffness is compared between the terminal of the comparative example, the terminal of Example 1, and the terminal of Example 2.
Fig. 16 is a diagram illustrating a relationship between an electric wire and a terminal constituting a coil and Joule heat for fusing.
Fig. 17 is a perspective view of a terminal of Modification 1.
Fig. 18 is a front view of the terminal of Modification 1.
Fig. 19 is a perspective view of a terminal of Modification 2.
Fig. 20 is a front view of the terminal of Modification 2.
Fig. 21 is a perspective view of a terminal of Modification 3.
Fig. 22 is a front view of the terminal of Modification 3.
Fig. 23 is a perspective view of a terminal of Modification 4.
Fig. 24 is a front view of the terminal of Modification 4.
Fig. 25 is a perspective view of a front side of a terminal of Modification 5.
Fig. 26 is a perspective view of a back side of the terminal of Modification 5.
Fig. 27 is a front view of the terminal of Modification 5.

DESCRIPTION OF EMBODIMENT

Hereinafter, exemplary embodiments of the present disclosure will be described with reference to the drawings.

The exemplary embodiments to be described below illustrate specific examples of the present disclosure. The numerical values, shapes, materials, constituent elements, arrangement positions and connection modes of the constituent elements, and the like illustrated in the following exemplary embodiments are each merely one example, and they are not intended to limit the present disclosure. Thus, among the constituent elements in the following exemplary embodiments, constituent elements that are not described in independent claims indicating the highest concept of the present disclosure are described as optional constituent elements.

Each of the drawings is a schematic view and is not necessarily exactly illustrated. In each drawing, substantially the same components as those in other drawings are denoted by the same reference numerals, and redundant description will be omitted or simplified. In the present specification and the drawings, a direction in which rotary shaft 21 of motor 1 extends is defined as axial direction X (first direction). In a plane orthogonal to axial direction X, a direction extending from shaft center C with shaft center C of rotary shaft 21 as a center is defined as radial direction Y (second direction). A direction that orbits shaft center C with shaft center C as a center is defined as circumferential direction Z (rotation direction). Axial direction X is a direction of shaft center C (shaft center direction) of rotary shaft 21. That is, axial direction X is a longitudinal direction of rotary shaft 21. Radial direction Y is a direction orthogonal to the direction of shaft center C of rotary shaft 21. In the present specification, the terms "upper" and "lower" do not necessarily refer to an upward direction (vertically upward) and a downward direction (vertically downward) in terms of absolute space recognition.

(Exemplary embodiment)

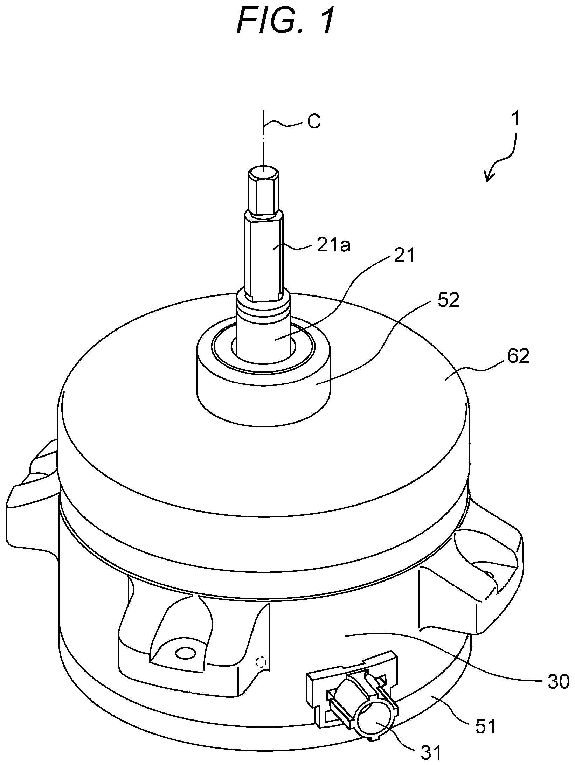

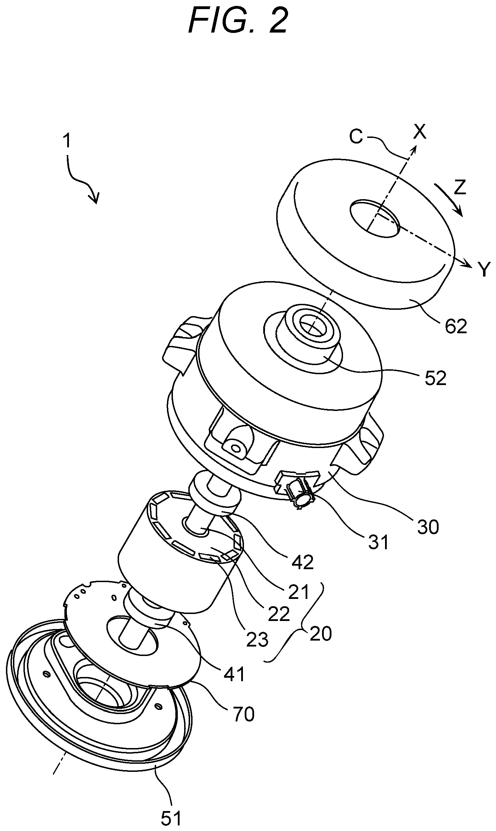

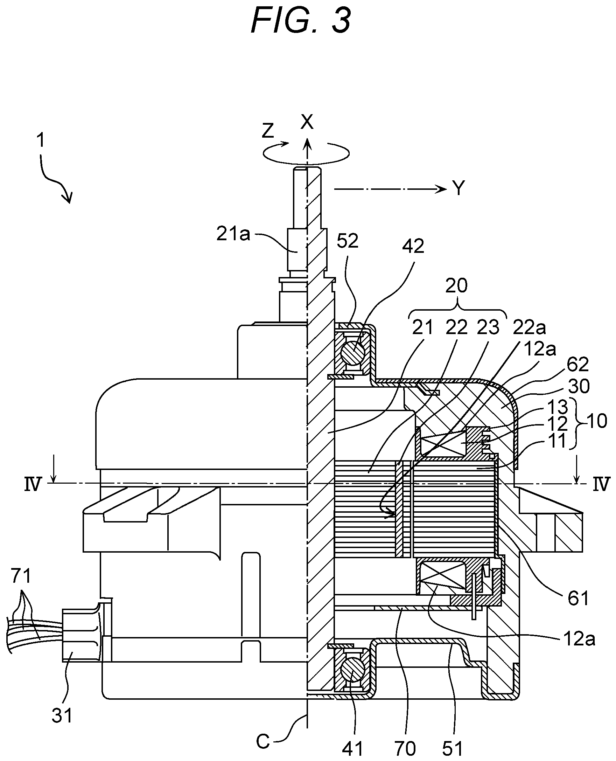

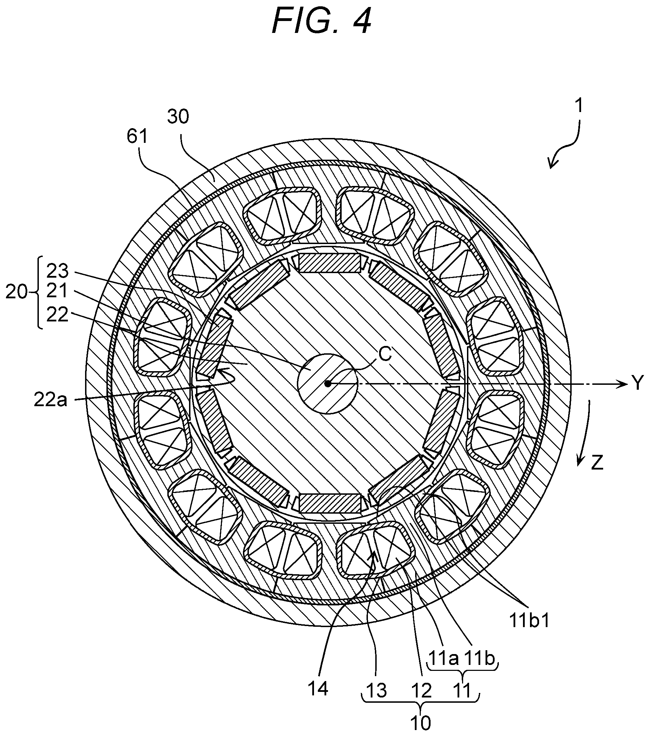

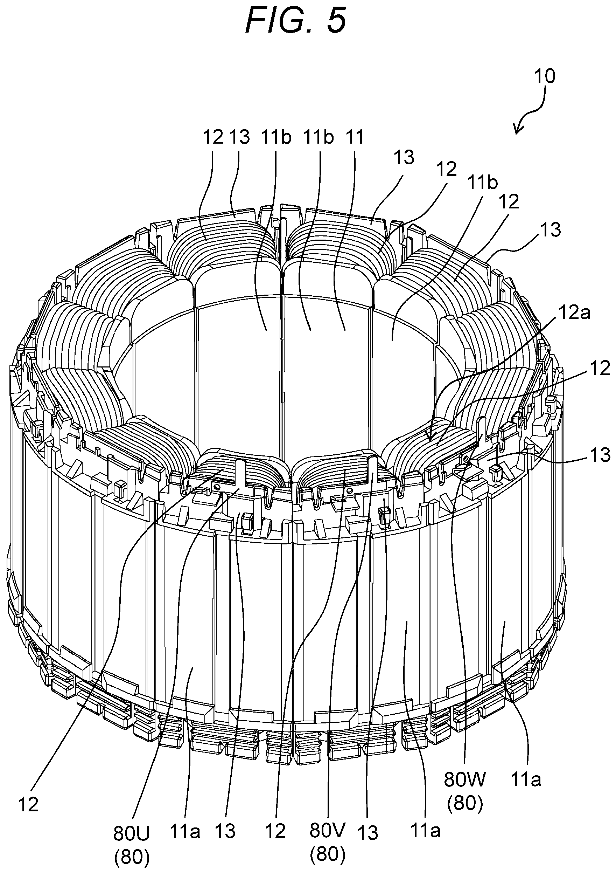

An overall configuration of motor 1 according to an exemplary embodiment will be described with reference to Figs. 1 to 5. Fig. 1 is a perspective view of motor 1 according to an exemplary embodiment. Fig. 2 is an exploded perspective view of motor 1 according to the exemplary embodiment. Fig. 3 is a half sectional view of motor 1 according to the exemplary embodiment. Fig. 4 is a sectional view of motor 1 taken along line IV-IV in Fig. 3. Fig. 5 is a perspective view of stator 10 in motor 1 according to the exemplary embodiment. Fig. 5 illustrates a state of stator 10 before being covered with molded resin 30. In Fig. 5, the electric wire connected to terminal 80 is omitted.

As illustrated in Figs. 1 to 4, motor 1 is a molded motor. Motor 1 includes stator 10, rotor 20 disposed to face stator 10, and molded resin 30 covering stator 10. Motor 1 further includes first bearing 41 and second bearing 42, first bracket 51 and second bracket 52, inner metal member 61 and outer metal member 62, and circuit board 70.

In motor 1, molded resin 30, first bracket 51, second bracket 52, and outer metal member 62 constitute an outer frame of motor 1.

Motor 1 is a brushless motor that does not use a brush. Motor 1 can be used as, for example, a blower motor requiring high output. As an example, motor 1 can be used as an air-conditioning motor mounted on an air-conditioning machine such as an air conditioner. Motor 1 is an inner rotor type motor in which rotor 20 is disposed inside stator 10. That is, stator 10 is disposed to surround rotor 20. Thus, rotor 20 rotates about shaft center C of rotary shaft 21 as a rotation center inside stator 10.

Stator 10 generates a magnetic force that acts on rotor 20. As illustrated in Figs. 3 and 4, stator 10 is disposed to surround rotor 20 with a minute air gap interposed between the stator and rotor 20. Specifically, stator 10 has a configuration in which a plurality of N poles and S poles are alternately and repeatedly present along the rotation direction to generate a magnetic flux on an air gap surface with rotor core 22 of rotor 20. Stator 10 constitutes a magnetic circuit together with rotor 20.

Stator 10 constitutes an armature. Stator 10 includes stator core 11, coil 12, and insulator 13.

Stator core 11 is an annular iron core that generates a magnetic force for rotating rotor 20. As illustrated in Fig. 3, stator core 11 is, for example, a stacked body in which a plurality of electromagnetic steel sheets are stacked in a longitudinal direction (axial direction X) of rotary shaft 21 of rotor 20. Stator core 11 is not limited to a stacked body. Stator core 11 may be a bulk body made of a magnetic material.

As illustrated in Fig. 4, stator core 11 includes yoke 11a and tooth 11b protruding from yoke 11a toward rotor 20. Stator core 11 is divided into a plurality of core blocks (divided cores). That is, stator core 11 of stator 10 includes a plurality of core blocks. Each core block has arc-shaped yoke 11a and one tooth 11b protruding from yoke 11a. The plurality of core blocks are combined to form an annular shape surrounding rotor 20 as a whole. Specifically, 12 core blocks are disposed to form an annular shape. Two adjacent core blocks are coupled to each other. Stator core 11 does not have to be formed of a plurality of core blocks. For example, stator core 11 may be formed of one annular yoke and a plurality of teeth 11b fixed inside the yoke.

Yoke 11a is a back yoke formed outside each of teeth 11b. The plurality of coupled yokes 11a are disposed in an annular shape centered on shaft center C.

As illustrated in Fig. 4, the plurality of teeth 11b are disposed at equal intervals in circumferential direction Z with slots 14, which are openings, formed between the teeth. Extension 11b1 extending to both sides in circumferential direction Z is formed at an extended tip portion of each of teeth 11b. The inner peripheral surface positioned at the tips of teeth 11b including extension 11b1 forms a magnetic pole surface facing an outer peripheral surface of rotor 20. There is a gap (slot opening) between extension 11b1 of one tooth 11b and extension 11b1 of another tooth 11b in two adjacent teeth 11b. Stator core 11 is provided with 12 teeth 11b. The number of slots 14 is 12. That is, the number of the slots of motor 1 is 12.

As illustrated in Figs. 3 to 5, coil 12 is constituted by an electric wire, and is a stator coil formed by winding an electric wire around stator core 11. In the present exemplary embodiment, coil 12 is a winding coil formed by winding an electric wire around stator core 11 with insulator 13 interposed between the electric wire and the stator core. Specifically, as illustrated in Figs. 4 and 5, coil 12 is wound around each of the plurality of teeth 11b of stator core 11.

As illustrated in Fig. 3, each coil 12 has coil end 12a protruding from stator core 11 in axial direction X (first direction) of rotary shaft 21. Coil end 12a is a portion of coil 12 wound around tooth 11b of stator core 11, the portion protruding from stator core 11 (tooth 11b) in axial direction X. Coil ends 12a protrude from stator core 11 to both sides of rotary shaft 21 in axial direction X. Each of teeth 11b includes coil end 12a (first coil end) positioned on output shaft 21a side, and coil end 12a (second coil end) positioned on the side opposite from output shaft 21a side.

Motor 1 is a high-output motor having an output of more than or equal to 750 W. Thus, as the electric wire constituting coil 12, a thick wire having wire diameter $\varphi$ of more than or equal to 0.3 mm is preferably used. As an example, wire diameter $\varphi$ of the electric wire constituting coil 12 is 0.5 mm to 1.0 mm. The material of the electric wire constituting coil 12 is, for example, copper having an electric conductivity of $64.5 \times 10^6$ S/m. The electric wire constituting coil 12 is an insulation-covered wire including a conductive wire made of copper as a core wire and an insulating film that insulates and covers the surface of the conductive wire.

The plurality of coils 12 form a three-phase winding so that rotor 20 can be rotated as a three-phase synchronous motor. Specifically, the plurality of coils 12 include unit coils of three phases of a U phase, a V phase, and a W phase which have phases electrically different from each other by 120 degrees. That is, coils 12 wound around teeth 11b are energized and driven by three-phase alternating currents energized in units of phases of the U phase, the V phase, and the W phase, respectively. As a result, a main magnetic flux of stator 10 is generated in each tooth 11b. That is, each tooth 11b is a magnetic pole tooth, and is an electromagnet that generates a magnetic force when a current flows through coils 12.

Coils 12 of the respective phases are connected by a crossover wire (not illustrated). The crossover wire is disposed on an outer peripheral wall portion or the like of insulator 13. As the crossover wire, the same electric wire as the electric wire constituting coil 12 can be used.

Coils 12 of respective phases are electrically connected to circuit board 70 (see Fig. 3). Circuit board 70 is a printed wiring substrate in which a plurality of wirings made of a conductive material such as copper are formed in a predetermined pattern. Three connection terminal parts corresponding to the U phase, the V phase, and the W phase are formed in each of the plurality of wirings. Circuit board 70 has an opening through which rotary shaft 21 passes in a central portion. The opening has, for example, an annular shape (donut shape), a fan shape (arc shape), a C shape, or the like.

A plurality of electronic components (not illustrated) for generating a current to be supplied to the plurality of coils 12 of stator 10 are mounted on circuit board 70. The plurality of electronic components constitute a power supply circuit that generates three-phase alternating currents of a U phase, a V phase, and a W phase. That is, circuit board 70 is a power supply substrate.

Coils 12 of respective phases are electrically connected to the winding connection part of circuit board 70 via terminal 80 (see Fig. 5). Terminal 80 is a connection terminal that electrically connects coils 12 and circuit board 70. For example, one of the plurality of coils 12 is connected to one terminal 80. Terminal 80 and circuit board 70 are connected by an electric wire such as a lead wire. The connection relationship between terminal 80 and coils 12 and a detailed structure of terminal 80 will be described later.

Insulator 13 has a portion interposed between stator core 11 and coil 12. Insulator 13 is an insulating frame that covers stator core 11. Specifically, insulator 13 covers teeth 11b of stator core 11. Insulator 13 is provided for each tooth 11b. Insulator 13 is made of, for example, an insulating resin material such as polybutylene terephthalate (PBT).

Rotor 20 rotates with a magnetic force generated in stator 10. As illustrated in Figs. 2 to 4, rotor 20 has rotary shaft 21 extending in the direction of shaft center C. Rotor 20 rotates about shaft center C of rotary shaft 21. Rotary shaft 21 extends along axial direction X.

Rotor 20 has a configuration in which a plurality of N poles and S poles are repeatedly present in circumferential direction Z. Rotor 20 is an interior permanent magnet (IPM) rotor. Rotor 20 includes rotor core 22 and permanent magnet 23 inserted into each of a plurality of magnet insertion holes 22a formed in rotor core 22.

As illustrated in Fig. 3, rotor core 22 is a substantially cylindrical stacked body in which a plurality of electromagnetic steel sheets are stacked along axial direction X of rotary shaft 21. As illustrated in Fig. 4, a plurality of magnet insertion holes 22a penetrating in axial direction X are formed in rotor core 22 at equal intervals in circumferential direction Z. One permanent magnet 23 is inserted into each magnet insertion hole 22a. The number of magnetic poles is 10. In magnet insertion holes 22a, 10 permanent magnets 23 are respectively disposed such that magnetic poles of S poles and N poles are alternately positioned in circumferential direction Z.

Rotary shaft 21 is fixed to the center of rotor core 22. Rotary shaft 21 is, for example, a shaft such as a metal rod. Rotary shaft 21 penetrates rotor core 22 to extend on both sides of rotor core 22. Rotary shaft 21 is fixed to rotor core 22 by, for example, press-fitting or shrink-fitting into a center hole of rotor core 22.

As illustrated in Fig. 3, rotary shaft 21 is held by first bearing 41 and second bearing 42. As a result, rotor 20 is rotatable with respect to stator 10. As an example, first bearing 41 and second bearing 42 are ball bearings that rotatably support rotary shaft 21. However, the present disclosure is not limited to this configuration. Rotary shaft 21 penetrates first bearing 41. Although not illustrated, a load such as a rotary fan is attached to a portion of rotary shaft 21 protruding from first bearing 41 to the outside. In rotary shaft 21, a portion to which a load such as a rotary fan is attached is also referred to as output shaft 21a.

As illustrated in Figs. 3 and 4, stator 10 is covered with molded resin 30. Molded resin 30 covers an outer portion of stator 10 over the entire circumference of stator 10 in circumferential direction Z. Specifically, molded resin 30 covers the outer portions of stator core 11, coils 12, and insulator 13. Molded resin 30 is in contact with outer surfaces of coils 12 and insulator 13.

Molded resin 30 constitutes a housing that is a part of the outer frame of motor 1. That is, molded resin 30 covering stator 10 constitutes a housing enclosing rotor 20. Molded resin 30 is a cylindrical body having openings at one end and the other end in axial direction X.

Molded resin 30 is made of an insulating resin material having excellent thermal conductivity, such as a polyester resin or an epoxy resin. From another point of view, molded resin 30 is made of a thermosetting resin. For example, molded resin 30 is made of unsaturated polyester that is a thermosetting resin. Specifically, molded resin 30 is made of white bulk molding compound (BMC) unsaturated polyester resin.

As illustrated in Fig. 3, first bracket 51 is provided at one end of molded resin 30 in axial direction X. Second bracket 52 is provided at the other end of molded resin 30 in axial direction X. First bracket 51 holds first bearing 41. First bearing 41 is fixed to a recess of first bracket 51. Second bracket 52 holds second bearing 42. Second bearing 42 is fixed to second bracket 52.

First bracket 51 is disposed so as to close the opening on one side of molded resin 30. Second bracket 52 is disposed so as to close the other opening of molded resin 30.

First bracket 51 and second bracket 52 are made of, for example, a metallic material such as iron. First bracket 51 and second bracket 52 are fixed to molded resin 30. Specifically, second bracket 52 is fixed to molded resin 30 together with stator 10 when stator 10 is molded with resin. First bracket 51 is fixed to molded resin 30 after molding.

Inner metal member 61 and outer metal member 62 are fixed to molded resin 30. Inner metal member 61 and outer metal member 62 are made of, for example, a metal plate such as a zinc steel plate.

Inner metal member 61 is an inner cover made of metal disposed inside molded resin 30. That is, inner metal member 61 is covered with molded resin 30. Inner metal member 61 covers stator 10. Inner metal member 61 is positioned between molded resin 30 and stator 10. Specifically, inner metal member 61 surrounds coil end 12a positioned on the side opposite from output shaft 21a side, insulator 13, and stator core 11. Inner metal member 61 is a cylindrical body having an annular cylindrical shape with a stepped portion on the outer surface and having both sides open. Stator 10 and inner metal member 61 are integrated together with molded resin 30.

Outer metal member 62 is an outer cover made of metal disposed outside molded resin 30. Outer metal member 62 covers the outer surface of molded resin 30. Outer metal member 62 is mounted on second bracket 52 side (output shaft 21a side) of molded resin 30. Specifically, outer metal member 62 surrounds coil end 12a positioned on output shaft 21a side and insulator 13. Outer metal member 62 has a cup shape having an opening at the center.

In this manner, in motor 1, one of coil ends 12a protruding to both sides in axial direction X is covered with inner metal member 61. As a result, inner metal member 61 can stop fire when an ignition occurs inside molded resin 30. Thus, fire can be prevented from leaking and spreading to the outside of motor 1.

In motor 1, the other of coil ends 12a protruding to both sides in axial direction X is covered with outer metal member 62. By providing outer metal member 62 in addition to inner metal member 61 like this, the fire generated inside molded resin 30 can be blocked also by outer metal member 62. Thus, fire can be further prevented from leaking and spreading to the outside of motor 1.

Although only one of inner metal member 61 and outer metal member 62 may be provided, fire can be reliably prevented from spouting out of motor 1 by providing both inner metal member 61 and outer metal member 62.

Lead bush 31 is attached to molded resin 30. Lead bush 31 is a cylindrical member. As illustrated in Fig. 3, electric wire 71 connected to circuit board 70 is inserted into lead bush 31. Lead bush 31 functions as a pull-out part for pulling out electric wire 71 to the outside. Lead bush 31 functions as a protective part that protects electric wire 71. Lead bush 31 is attached to molded resin 30 by being inserted into an opening formed in a part of the outer wall of molded resin 30. Lead bush 31 is made of a resin material such as polybutylene terephthalate (PBT) or a non-metallic material such as ceramic.

Power for energizing coils 12 wound around stator 10 is supplied to electric wire 71. That is, external power is supplied to circuit board 70 via electric wire 71. Electric wire 71 is a power supply line. Electric wire 71 is, for example, a lead wire. Electric wire 71 includes three lead wires. Power for directly or indirectly energizing coils 12 is supplied to electric wire 71. A signal for controlling motor 1 may be supplied to electric wire 71 from a controller outside motor 1.

In rotor 20 configured as described above, when coils 12 of stator 10 are energized, a field current flows to coils 12, and a magnetic flux is generated in stator 10 (stator core 11). As a result, a magnetic flux directed from stator 10 toward rotor 20 is generated. Specifically, a magnetic flux directed from each of teeth 11b of stator core 11 of stator 10 toward rotor core 22 of rotor 20 is generated. On the other hand, in rotor 20, a magnetic flux passing through stator 10 is generated by permanent magnet 23 embedded in rotor core 22. The magnetic force generated by the interaction between the magnetic flux generated in stator 10 and the magnetic flux generated from permanent magnet 23 of rotor 20 becomes a torque that rotates rotor 20, and rotor 20 rotates.

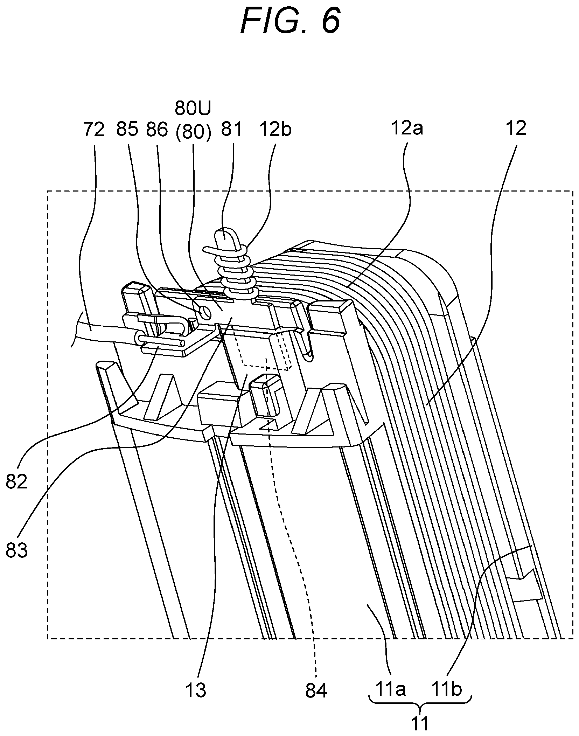

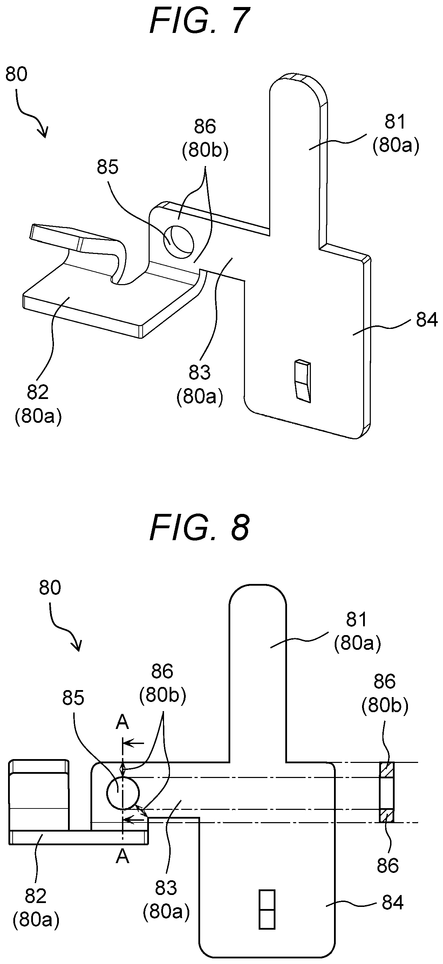

The connection relationship between terminal 80 and coils 12 used for stator 10 and a detailed structure of terminal 80 will be described with reference to Figs. 6 to 8 while referring to Fig. 5. Fig. 6 is an enlarged perspective view illustrating a configuration of a part of stator 10 according to the exemplary embodiment. Specifically, Fig. 6 illustrates a part of a core block to which first terminal 80U is fixed among the plurality of core blocks constituting stator 10. Figs. 7 and 8 illustrate a configuration of terminal 80 of Example 1 used in stator 10 according to the exemplary embodiment. Fig. 7 is a perspective view of terminal 80 of Example 1 used in stator 10 according to the exemplary embodiment. Fig. 8 is a front view of terminal 80 of Example 1 used in stator 10 according to the exemplary embodiment. Fig. 8 also illustrates a section taken along line A-A.

As illustrated in Fig. 5, stator 10 has three terminals 80. Each terminal 80 is electrically connected to the electric wire constituting coil 12. Each of three terminals 80 is fixed to insulator 13. Specifically, three terminals 80 are respectively fixed to three insulators 13 arranged continuously in circumferential direction Z. Each terminal 80 is fixed to insulator 13 by being press-fitted into a hole provided in insulator 13.

Three terminals 80 are first terminal 80U, second terminal 80V, and third terminal 80W. First terminal 80U is a terminal corresponding to the U phase. A current corresponding to the U phase flows through first terminal 80U. Second terminal 80V is a terminal corresponding to V phase. A current corresponding to the V phase flows through second terminal 80V. Third terminal 80W is a terminal corresponding to the W phase. A current corresponding to the W phase flows through third terminal 80W. Although not illustrated, as fourth terminal 80, a terminal for electrolytic corrosion countermeasure to which a lead wire for electrolytic corrosion countermeasure is connected may be fixed to any of insulators 13.

U-phase coil 12 is connected to first terminal 80U. An electric wire constituting U-phase coil 12 is directly connected to first terminal 80U. Specifically, as illustrated in Fig. 6, end part 12b of the electric wire constituting U-phase coil 12 is connected to first terminal 80U. For example, by winding and fixing end part 12b of U-phase coil 12 around a part of first terminal 80U, first terminal 80U and end part 12b of U-phase coil 12 are connected. End part 12b of wound U-phase coil 12 and first terminal 80U may be fixed by soldering, for example.

As illustrated in Fig. 6, first terminal 80U and the connection terminal part corresponding to the U phase in circuit board 70 are connected by lead wire 72 that is a U-phase lead wire. That is, one end of lead wire 72 is connected to first terminal 80U. The other end of lead wire 72 is connected to the connection terminal part corresponding to the U phase in circuit board 70.

V-phase coil 12 is connected to second terminal 80V. An electric wire constituting V-phase coil 12 is directly connected to second terminal 80V. Specifically, an end of an electric wire constituting V-phase coil 12 is connected to second terminal 80V. For example, similarly to first terminal 80U, by winding and fixing the end of V-phase coil 12 around a part of second terminal 80V, second terminal 80V and the end of V-phase coil 12 are connected. The end of wound V-phase coil 12 and second terminal 80V may be fixed by soldering, for example.

Although not illustrated, similarly to first terminal 80U, second terminal 80V and the connection terminal part corresponding to the V phase in circuit board 70 are connected by lead wire 72 that is a V-phase lead wire. That is, one end of lead wire 72 is connected to second terminal 80V. The other end of lead wire 72 is connected to the connection terminal part corresponding to the V phase in circuit board 70.

W-phase coil 12 is connected to third terminal 80W. An electric wire constituting W-phase coil 12 is directly connected to third terminal 80W. Specifically, an end of an electric wire constituting W-phase coil 12 is connected to third terminal 80W. For example, similarly to first terminal 80U, by winding and fixing the end of W-phase coil 12 around a part of third terminal 80W, third terminal 80W and the end of W-phase coil 12 are connected. The end of wound W-phase coil 12 and third terminal 80W may be fixed by soldering, for example.

Although not illustrated, similarly to first terminal 80U, third terminal 80W and wire connection terminal part corresponding to the W phase in circuit board 70 are connected by lead wire 72 that is a W-phase lead wire. That is, one end of lead wire 72 is connected to third terminal 80W. The other end of lead wire 72 is connected to the connection terminal part corresponding to the W phase in circuit board 70.

In this manner, electric wires constituting three coils 12 corresponding to the U phase, the V phase, and the W phase are connected to first terminal 80U, second terminal 80V, and third terminal 80W, respectively. Three lead wires 72 corresponding to the U phase, the V phase, and the W phase connected to the wire connection terminal part of circuit board 70 are connected to first terminal 80U, second terminal 80V, and third terminal 80W, respectively.

Three terminals 80 of first terminal 80U, second terminal 80V, and third terminal 80W are the same component. That is, three terminals 80 are formed of the same shape and the same material.

As illustrated in Figs. 7 and 8, terminal 80 includes first connecting part 81 to which the first electric wire is connected, second connecting part 82 to which the second electric wire is connected, main body 83, and a fixture part 84.

Terminal 80 is made of a conductive material. Specifically, terminal 80 is a metal terminal made of a metallic material. As an example, terminal 80 is made of a copper alloy.

Terminal 80 is made of a metal plate. Specifically, terminal 80 is formed in a predetermined three-dimensional shape by performing bending processing or the like on a metal plate punched into a predetermined shape and having a constant thickness. Since terminal 80 is made of a metal plate like this, first connecting part 81, second connecting part 82, main body 83, and fixture part 84 have a plate shape. As an example, the thickness of the metal plate constituting terminal 80 is less than or equal to 1 mm, and the thickness is 0.5 mm in the present exemplary embodiment.

As illustrated in Fig. 6, an electric wire constituting coil 12 is connected to first connecting part 81 as a first electric wire. Specifically, an electric wire constituting coil 12 is wound around first connecting part 81. First connecting part 81 has a shape protruding from a part of main body 83. First connecting part 81 and main body 83 form the same plane. First connecting part 81 protrudes from a part of one side of main body 83 so as to form an elongated rectangular shape. First connecting part 81 is a portion different from main body 83. However, it may be a part of main body 83.

As illustrated in Fig. 6, lead wire 72 connected to circuit board 70 is connected to second connecting part 82 as a second electric wire. Second connecting part 82 and lead wire 72 are joined by, for example, fusing (thermal caulking). Second connecting part 82 has a shape protruding from a part of main body 83. Second connecting part 82 is formed to stand on main body 83. Second connecting part 82 protrudes so as to be bent from a part of one side of main body 83. Second connecting part 82 is a portion different from main body 83. However, second connecting part 82 may be a part of main body 83.

Main body 83 is a portion serving as a current path between first connecting part 81 and second connecting part 82. As an example, main body 83 has a rectangular shape in plan view. However, the present disclosure is not limited to this configuration.

As illustrated in Fig. 6, fixture part 84 is a portion fixed to insulator 13. Specifically, fixture part 84 is a press-fit part press-fitted into a hole formed in insulator 13. Fixture part 84 is basically a portion that does not function as a current path between first connecting part 81 and second connecting part 82. Fixture part 84 is a portion different from main body 83.

In terminal 80, a portion in which a sectional area of a part of terminal 80 is reduced is formed. In the present exemplary embodiment, as illustrated in Figs. 7 and 8, through hole 85 is formed in main body 83 of terminal 80 as a portion where the sectional area is reduced. That is, by forming through hole 85 in main body 83, the width of main body 83 is intentionally reduced to reduce the sectional area. As an example, through hole 85 has a circular shape in plan view.

Terminal 80 has branch 86 in which a current path is branched by through hole 85. That is, through hole 85 is formed at both ends on the outer side of main body 83 of terminal 80 with a portion to be branch 86 being left. Since there is one through hole 85 formed in terminal 80, two branches 86 are formed by through hole 85. By forming branches 86 in main body 83 like this, a current hardly flows through main body 83 in branch 86. That is, branch 86 functions as a current limitation part in main body 83.

In terminal 80 configured as described above, Joule heat is generated in each portion of terminal 80 by motor 1 being driven and the current flowing through terminal 80. Terminal 80 includes first portion 80a in which Joule heat to be generated is large and second portion 80b in which Joule heat to be generated is smaller than Joule heat of first portion 80a. Joule heat is generated by a current flowing through first portion 80a and second portion 80b.

In general, Joule heat Q [J] generated in an object per unit time is expressed by the following (Formula 1).

$$Q = RI^2 = (S/\rho \cdot L)I^2 \text{ (Formula 1)}$$

In (Formula 1), R [$\Omega$] is the resistance of the object. I [A] is a current flowing through the object. S [$m^2$] is a sectional area of the object. $\rho$ [S/m] is the electrical conductivity of the object. L [m] is the length of the object.

Thus, when the electrical conductivity of the object decreases, the Joule heat to be generated increases. As the electrical conductivity increases, the Joule heat to be generated decreases. The smaller the sectional area of the object, the smaller the Joule heat to be generated.

In terminal 80, second portion 80b where the Joule heat to be generated is smaller than that of first portion 80a is a portion formed by reducing the sectional area of a part of terminal 80 in the direction in which the current flows. Second portion 80b is formed in main body 83. On the other hand, first portion 80a is a portion whose sectional area is not reduced. First portion 80a is a portion other than second portion 80b in main body 83, and first connecting part 81 or second connecting part 82. The portion other than second portion 80b in main body 83, first connecting part 81, and second connecting part 82 are not formed with a portion whose sectional area is reduced, and thus they are all first portion 80a.

Second portion 80b of terminal 80 illustrated in Figs. 7 and 8 is branch 86. Thus, in terminal 80, Joule heat generated in second portion 80b (two branches 86) is smaller than Joule heat generated in first portion 80a.

The Joule heat generated in second portion 80b is Joule heat generated in a portion having the smallest sectional area among the portions where the sectional area is reduced in main body 83. In the present exemplary embodiment, since two branches 86 are formed by forming through hole 85, the Joule heat generated in second portion 80b is the sum of the Joule heat generated in the portion having the smallest sectional area in each of two branches 86. That is, the sectional area of second portion 80b at a time when Joule heat is calculated is the sum of the minimum sectional areas of two branches 86.

In the electric wire and terminal 80 constituting coil 12, the Joule heat generated in first portion 80a of terminal 80 is larger than the Joule heat generated in the electric wire constituting coil 12.

Terminal 80 and the electric wire constituting coil 12 are made of different conductive materials. Specifically, the electrical conductivity of the conductive material constituting terminal 80 is smaller than the electrical conductivity of the conductive material of the electric wire constituting coil 12. For example, when the conductive material of the electric wire constituting coil 12 is copper (electric conductivity: $64.5 \times 10^6$ S/m), terminal 80 can be made of phosphor bronze (electric conductivity: $13 \times 10^6$ S/m) or aluminum (electric conductivity: $40.0 \times 10^6$ S/m). In the present exemplary embodiment, phosphor bronze having a lower electric conductivity is used as the conductive material constituting terminal 80. In this manner, the electrical conductivity of the conductive material constituting terminal 80 is made lower than the electrical conductivity of the conductive material of the electric wire constituting coil 12. As a result, even when the sectional area of terminal 80 is equal to or smaller than the sectional area of the electric wire constituting coil 12, the Joule heat to be generated at terminal 80 can be easily made larger than the Joule heat to be generated at the electric wire constituting coil 12.

The sectional area of first portion 80a of main body 83 in terminal 80 is larger than the sectional area of the electric wire constituting coil 12. As a result, not only the Joule heat to be generated in first portion 80a of terminal 80 can be easily made larger than the Joule heat to be generated in the electric wire constituting coil 12, but also the flow of the current flowing through the electric wire constituting coil 12 can be prevented from being blocked.

In terminal 80 configured as described above, when motor 1 is driven, and a current flows through coil 12 and terminal 80 connected to terminal 80, Joule heat is generated in the electric wire constituting coil 12 and terminal 80. At this time, second Joule heat (Q2) is larger than first Joule heat (Q1), and third Joule heat (Q3) is smaller than first Joule heat (Q1), assuming that first Joule heat (Q1) is the Joule heat generated in the electric wire constituting coil 12 when a current flows through the electric wire, second Joule heat (Q2) is the Joule heat generated in first portion 80a of terminal 80 when a current flows through first portion 80a, and third Joule heat (Q3) is the Joule heat generated in second portion 80b of terminal 80 when a current flows through second portion 80b. That is, first Joule heat (Q1), second Joule heat (Q2), and third Joule heat (Q3) satisfy the relationship of Q2 > Q1 > Q3.

When the second Joule heat generated in first portion 80a of terminal 80 is smaller than the first Joule heat generated in the electric wire constituting coil 12 (that is, Q2 < Q1), and the electric wire constituting coil 12 is thickened to increase the sectional area to increase the efficiency of motor 1, the current flowing from circuit board 70 to coil 12 is narrowed by terminal 80, and the flow is restricted, which reduces the efficiency of the motor. On the other hand, as described above, by making the second Joule heat generated in first portion 80a of terminal 80 larger than the first Joule heat generated in the electric wire constituting coil 12 (that is, Q2 > Q1), the current flowing from circuit board 70 to coil 12 can be prevented from being limited by terminal 80 even when the electric wire constituting coil 12 is thickened. That is, by satisfying the relationship Q2 > Q1, the electric wire constituting coil 12 can be thickened, and the efficiency of motor 1 can be easily increased.

By making second Joule heat (Q2) generated in first portion 80a of terminal 80 larger than third Joule heat (Q3) generated in second portion 80b of terminal 80 (that is, Q2 > Q3), second portion 80b fuses and cuts off the current flow at terminal 80 when an overcurrent flows through terminal 80, and the temperature of terminal 80 is abnormally high. That is, terminal 80 having second portion 80b functions as a fuse. Thus, the safety of motor 1 can be ensured.

Terminal 80 is a connection terminal with a fuse function having a fuse function like this. That is, terminal 80 is a connection component and functions as a fuse component. Specifically, terminal 80 can have a fuse function simply with a formation of second portion 80b in a part of terminal 80 which is a connection terminal that has been used so far. With this configuration, the safety of motor 1 at the time of overcurrent can be secured without separately using a special fuse component. Thus, mass productivity can be improved as compared with a case where a fuse component is separately used.

As described above, according to stator 10 and motor 1 of the present exemplary embodiment, the materials of coil 12 and terminal 80 are contrived, and the shape of terminal 80 is contrived so as to satisfy the relationship of Q2 > Q1 > Q3. Specifically, as the shape of terminal 80, the sectional area of terminal 80 is partially reduced to satisfy the relationship of Q2 > Q1 > Q3. More specifically, in terminal 80, the sectional area of second portion 80b is smaller than the sectional area of first portion 80a. As a result, second portion 80b functioning as a fuse can be formed in terminal 80 without limiting the current flowing through coil 12. Thus, the current flowing through coil 12 can be cut off early even when the electric wire constituting coil 12 is thickened. For example, even when the sectional area of terminal 80 and the sectional area of the electric wire constituting coil 12 are the same, second portion 80b of terminal 80 can be fused with Joule heat smaller than that of the electric wire constituting coil 12 to cut off the current path. Thus, there is no possibility of affecting the efficiency of motor 1. Thus, motor 1 having excellent mass productivity can be realized while achieving both safety and high efficiency.

In particular, in the present exemplary embodiment, second portion 80b functioning as a fuse is formed in terminal 80 by forming through hole 85 in terminal 80. Through hole 85 can be formed, for example, when a metal plate constituting terminal 80 is punched into a predetermined shape. That is, second portion 80b (branch 86) can be formed by forming through hole 85 in terminal 80 without adding a step of only forming through hole 85 when terminal 80 is produced. Thus, motor 1 excellent in mass productivity can be obtained. A step of forming only through hole 85 may be separately added.

In addition, the electrical conductivity of the conductive material constituting terminal 80 is smaller than the electrical conductivity of the conductive material of the electric wire constituting coil 12.

A material having a lower electrical conductivity generates larger Joule heat at the same sectional area and the same current value. Thus, by making the electrical conductivity of the conductive material constituting terminal 80 smaller than the electrical conductivity of the conductive material of the electric wire constituting coil 12, Joule heat to be generated in second portion 80b of terminal 80 can be made larger than Joule heat to be generated in the electric wire constituting coil 12 even when the sectional area of terminal 80 and the sectional area of the electric wire constituting coil 12 are the same. With this configuration, the temperature of second portion 80b of terminal 80 can reach the temperature at which second portion 80b of terminal 80 fuses. Thus, second portion 80b of terminal 80 can be fused early to cut off the current flowing through coil 12.

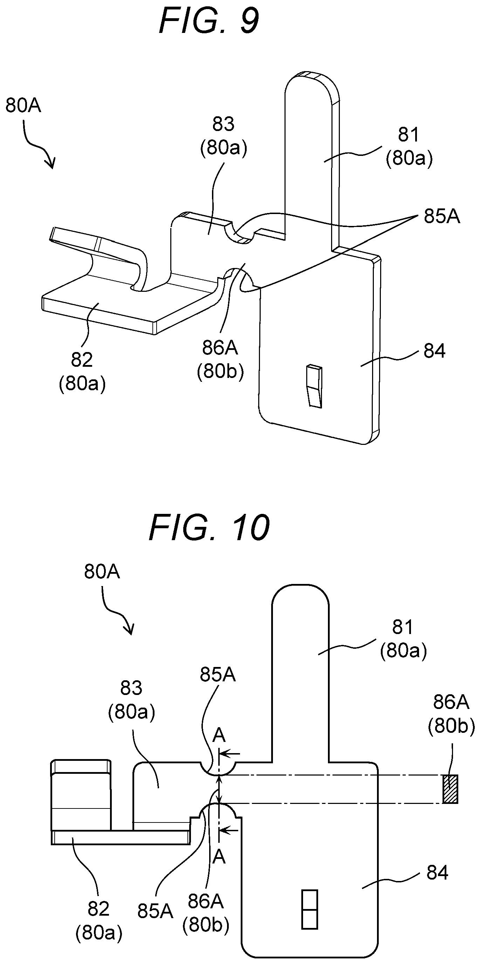

In terminal 80 illustrated in Figs. 7 and 8, second portion 80b is formed by forming through hole 85 in main body 83. However, the present disclosure is not limited to this configuration. For example, terminal 80A may have a shape illustrated in Figs. 9 and 10. Fig. 9 is a perspective view of terminal 80A of Example 2 used in stator 10 according to the exemplary embodiment. Fig. 10 is a front view of terminal 80A of Example 2 used in stator 10 according to the exemplary embodiment. Fig. 10 also illustrates a section taken along line A-A.

As illustrated in Figs. 9 and 10, terminal 80A of Example 2 includes first connecting part 81, second connecting part 82, main body 83, and fixture part 84, similarly to terminal 80 of Example 1.

Also in terminal 80A of Example 2, similarly to terminal 80 of Example 1, a portion in which a sectional area of a part of terminal 80A is reduced is formed. Specifically, in terminal 80A, cutout 85A is formed in main body 83 as a portion where the sectional area is reduced. Cutout 85A is formed by cutting out a part of the outer edge of terminal 80A. Specifically, cutout 85A is formed by cutting out each of both outer end edges of main body 83. That is, a pair of cutouts 85A is formed in main body 83. The pair of cutouts 85A is formed at positions facing each other. A plan view shape of the pair of cutouts 85A is semicircular.

Terminal 80A has narrow part 86A partially narrowed in width by forming cutout 85A. In terminal 80A, second portion 80b where Joule heat to be generated is smaller than that of first portion 80a is narrow part 86A. First portion 80a of terminal 80A is a portion whose sectional area is not reduced. First portion 80a of terminal 80A is a portion other than second portion 80b of main body 83, first connecting part 81, and second connecting part 82.

Also in terminal 80A of Example 2, similarly to terminal 80 of Example 1, the Joule heat generated in second portion 80b (narrow part 86A) is the Joule heat generated in a portion having the smallest sectional area among the portions where the sectional area is reduced in main body 83. Specifically, in terminal 80A, narrow part 86A is formed by forming cutout 85A. The Joule heat generated in second portion 80b is the Joule heat generated in a portion having the smallest sectional area in narrow part 86A.

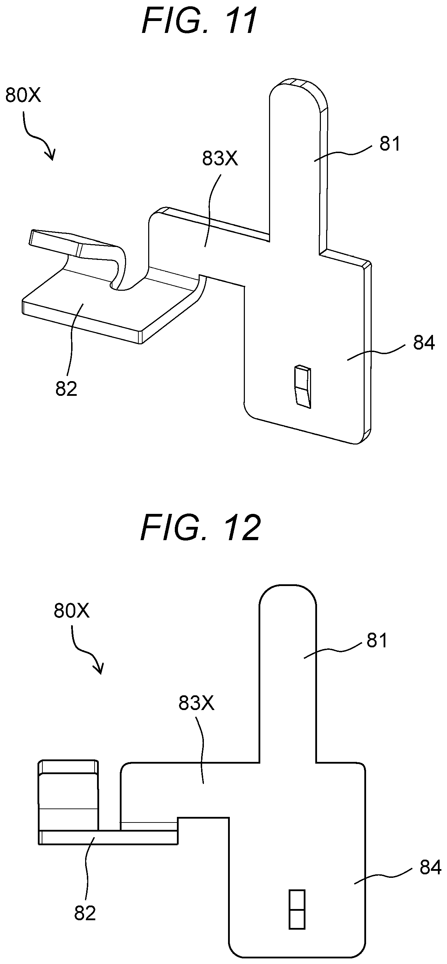

For terminal 80 of Example 1 illustrated in Figs. 7 and 8, terminal 80A of Example 2 illustrated in Figs. 9 and 10, and terminal 80X of a comparative example illustrated in Figs. 11 and 12, an experiment to compare ease of fusing and stiffness was conducted. Hereinafter, the experimental results will be described.

Figs. 11 and 12 are views illustrating a configuration of terminal 80X of a comparative example. Fig. 11 is a perspective view of terminal 80X of the comparative example. Fig. 12 is a front view of terminal 80X of the comparative example.

As illustrated in Figs. 11 and 12, neither the through hole nor the cutout is formed in terminal 80X of the comparative example. That is, in terminal 80X of the comparative example, there is no portion corresponding to second portion 80b formed in terminal 80 and terminal 80A, and entire terminal 80X is first portion 80a. Specifically, terminal 80X of the comparative example includes first connecting part 81, second connecting part 82, main body 83X, and fixture part 84. In main body 83X, neither through hole 85 present in terminal 80 of Example 1 nor cutout 85A present in terminal 80A of Example 2 is formed.

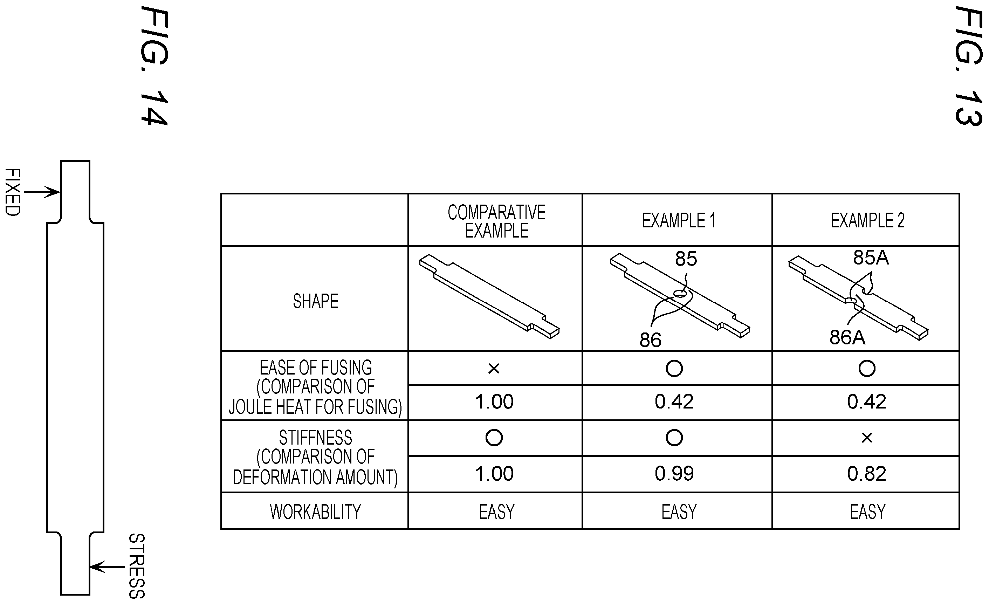

Fig. 13 is a diagram illustrating the results of comparison between terminal 80X of the comparative example, terminal 80 of Example 1, and terminal 80A of Example 2. In this experiment, as shown in the column of "SHAPE" in Fig. 13, terminal 80 of Example 1, terminal 80A of Example 2, and terminal 80X of the comparative example were modeled and evaluated using terminal plates having the same plate thickness, the same length, and the same width. As illustrated in Fig. 13, the terminal plate of Example 1 has a structure in which circular through hole 85 is formed in the terminal plate of the comparative example to provide two branches 86. The terminal plate of Example 2 has a structure in which a pair of semicircular cutouts 85A is formed in the terminal plate of the comparative example to provide narrow part 86A. The total sectional area of two branches 86 of the terminal plate of Example 1 was the same as the sectional area of narrow part 86A of the terminal plate of Example 2, and the current density per sectional area was the same between the terminal plate of Example 1 and the terminal plate of Example 2.

A result of comparison of the ease of fusing will be described. The ease of fusing was evaluated by comparing Joule heat required when each terminal plate fuses (Joule heat for fusing).

As a result, as illustrated in Fig. 13, when the Joule heat for fusing of the terminal plate of the comparative example was normalized to 1.00, the Joule heat for fusing of the terminal plate of Example 1 and the terminal plate of Example 2 was 0.42. That is, it was found that the terminal plate of Example 1 and the terminal plate of Example 2 had a structure that is more likely to fuse than the terminal plate of the comparative example. It was found that the terminal plate of Example 1 and the terminal plate of Example 2 are the same in ease of fusing.

A result of comparison of the stiffness will be described. Fig. 14 is a diagram for describing an experimental method for comparing the stiffness between terminal 80X of the comparative example, terminal 80 of Example 1, and terminal 80A of Example 2. As illustrated in Fig. 14, the stiffness of each terminal plate was evaluated by fixing one end of the terminal plate in the longitudinal direction and measuring the amount of deformation when stress was applied to the opposite end. The larger the deformation amount, the lower the stiffness. As the test conditions, the Young's modulus of the terminal plate was set to 110 GPa, the Poisson's ratio was set to 0.33, and the stress applied to the terminal plate was set to 100,000 N.

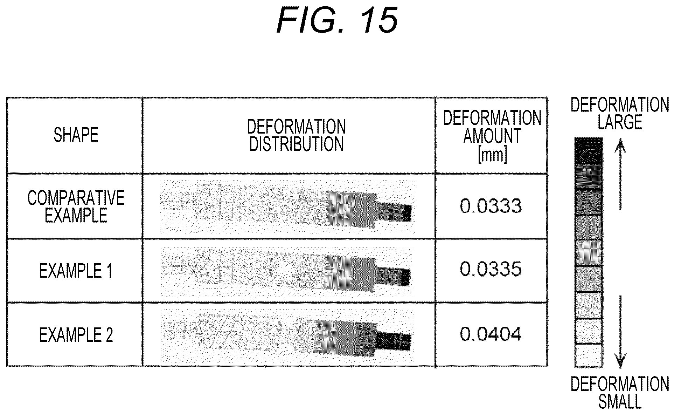

The results are illustrated in Fig. 15. Fig. 15 is a diagram illustrating the experimental result when the stiffness is compared between the terminal of the comparative example, the terminal of Example 1, and the terminal of Example 2. As illustrated in Fig. 15, the deformation amount of the terminal plate of the comparative example was 0.0333 mm. The deformation amount of the terminal plate of Example 1 was 0.0335 mm. The deformation amount of the terminal plate of Example 2 was 0.0404 mm.

To summarize the results, as illustrated in Fig. 13, when the stiffness of the terminal plate of the comparative example was normalized to 1.00, the stiffness of the terminal plate of Example 1 was 0.99, and the stiffness of the terminal plate of Example 2 was 0.82. That is, it was found that the terminal plate of Example 1 has the same stiffness as the terminal plate of the comparative example in which neither a through hole nor a cutout is formed. On the other hand, it was found that the terminal plate of Example 2 was slightly inferior in stiffness to the terminal plate of Example 1 and the terminal plate of Comparative Example. "STIFFNESS" shown in Fig. 13 means that the smaller the numerical value, the larger the deformation amount, that is, the deformation is likely to occur.

As illustrated in Fig. 13, all of the terminal plate of the comparative example, the terminal plate of Example 1, and the terminal plate of Example 2 can be easily processed. That is, these terminal plates are equivalent in workability. That is, the terminal plate of the comparative example, the terminal plate of Example 1, and the terminal plate of Example 2 are all excellent in mass productivity.

An experiment was conducted to compare the Joule heat for fusing when terminal 80A having cutout 85A and the electric wire (coil electric wire) constituting coil 12 fuse. The experimental results will be described below.

In this experiment, a copper wire made of copper was used as the coil wire. As terminal 80A, one formed of a metal plate made of phosphor bronze having a thickness of 0.5 mm was used. The length of the coil wire (copper wire) was set to 400 mm. A terminal was connected to the center. Specifically, a coil wire having a length of 400 mm was divided into two, and one end of one coil wire having a length of 200 mm was connected to the first connecting part of terminal 80A. One end of the other coil electric wire having a length of 200 mm was connected to the second connecting part of terminal 80A. The default sectional area of initial terminal 80A (that is, the terminal of the comparative example) before cutout 85A was formed was set to 2.0 mm$^2$. The sectional area of the narrow part (second portion 80b) of terminal 80A was changed by changing the cutout amount of cutout 85A formed in the terminal. The sectional area of the coil wire was changed using a coil wire having a different wire diameter. Specifically, four types of coil wires having wire diameters of $\varphi$ 0.25 mm, $\varphi$ 0.5 mm, $\varphi$ 0.65 mm, and $\varphi$ 0.8 mm were prepared.

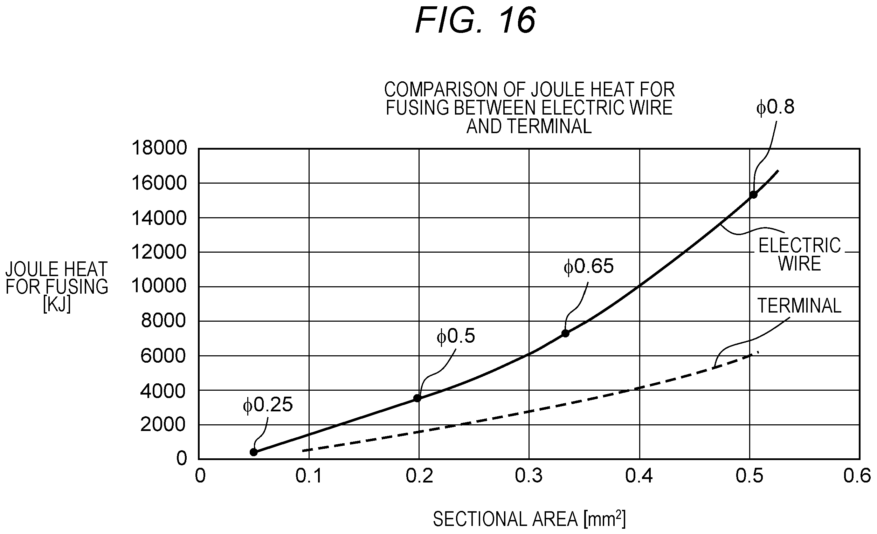

A voltage of 50 V was applied between the both ends of the coil wire (open ends of each of the two coil wires), and the Joule heat for fusing was obtained from the voltage and the current value when the coil wire or the terminal fused. The results are shown in Fig. 16.

Fig. 16 is a diagram illustrating a relationship between the electric wire and terminal 80A constituting a coil and Joule heat for fusing. As illustrated in Fig. 16, when terminal 80A is made of phosphor bronze, and the coil wire is made of copper wire, it can be seen that terminal 80A is more likely to fuse than the coil wire having a similar sectional area. In this case, for example, when a copper wire having a wire diameter of $\varphi$ 0.8 mm (sectional area 0.5024 mm$^2$) is used as the coil wire, it can be seen that Joule heat required for fusing can be reduced by about 60% by using terminal 80A having narrow part 86A (second portion 80b) with a sectional area of 0.5 mm$^2$.

As illustrated in Fig. 16, even when the sectional area of terminal 80A is larger than the sectional area of the coil wire, it can be seen that there is a region where terminal 80A is more likely to fuse. For example, since terminal 80A having narrow part 86A (second portion 80b) with a sectional area of 0.5 mm$^2$ is fused by Joule heat of 6000 kJ, a coil wire that is not fused by Joule heat of 6000 kJ may be used when terminal 80A is used. That is, it is preferable to use a coil wire having a sectional area of about more than or equal to 0.3 mm$^2$. As a result, terminal 80A can fuse before the coil wire fuse.

In this experiment, terminal 80A whose sectional area is reduced by cutout 85A was examined. On the other hand, it was confirmed that the results illustrated in Fig. 16 show that the same applies to terminal 80 whose sectional area is reduced by through hole 85.

As described above, stator 10 of the present exemplary embodiment includes stator core 11, coil 12 formed by winding electric wire 71 around stator core 11, and terminal 80 electrically connected to electric wire 71. Terminal 80 has first portion 80a through which a current flows, and second portion 80b formed by reducing the sectional area of a part of terminal 80 in the direction in which the current flows. Second Joule heat is larger than first Joule heat, and third Joule heat is smaller than the first Joule heat, assuming that the first Joule heat is the Joule heat generated in electric wire 71 when a current flows through electric wire 71, the second Joule heat is the Joule heat generated in first portion 80a when a current flows through first portion 80a, and the third Joule heat is the Joule heat generated in second portion 80b when a current flows through second portion 80b.

With this configuration, a motor having excellent mass productivity can be realized while achieving both safety and high efficiency.

(Modification)

Motor 1 according to the present disclosure has been described above based on the exemplary embodiment. The present disclosure is not limited to the exemplary embodiment described above.

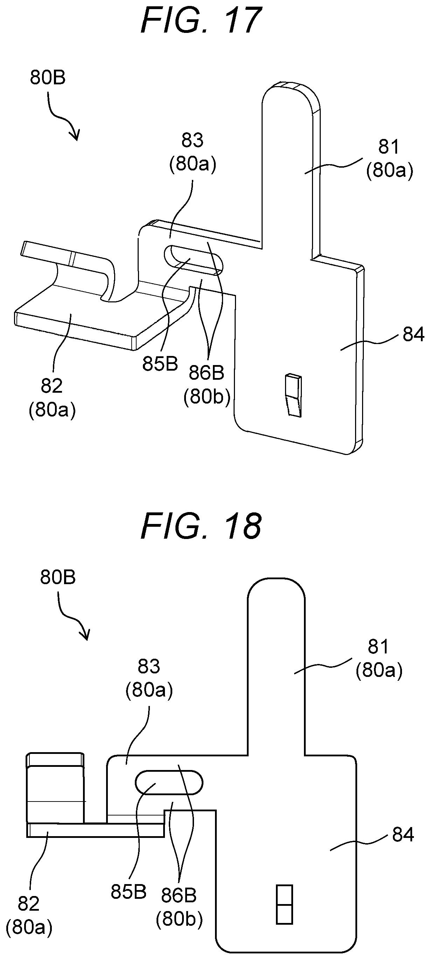

For example, in terminal 80 illustrated in Figs. 7 and 8, through hole 85 formed in main body 83 has a circular shape in plan view. However, the present disclosure is not limited to this configuration. Fig. 17 is a perspective view of terminal 80B of Modification 1. Fig. 18 is a front view of terminal 80B of Modification 1. Specifically, as in terminal 80B of Modification 1 illustrated in Figs. 17 and 18, through hole 85B formed in main body 83 may have an oval shape in plan view. Similarly to terminal 80 illustrated in Figs. 7 and 8, terminal 80B of the present modification also includes a pair of branches 86B in which a current path is branched by through hole 85B. Second portion 80b of terminal 80B is branch 86B. In this case, in terminal 80B of the present modification, through hole 85B having an oval shape extends in the direction along the current path. Thus, the length of the pair of branches 86B is longer than the length of the pair of branches 86 of terminal 80. In the present modification, through hole 85B extends in a direction along the current path. However, the present disclosure is not limited to this configuration. For example, through hole 85B may extend in a direction intersecting with the current path (for example, an orthogonal direction). The shape of the through hole formed in main body 83 in plan view is not limited to a circular shape or an oval shape. A plan view shape of the through hole may be an elliptical shape, a polygonal shape such as a rectangle or a triangle, an elongated linear shape such as a slit shape, or any other shape.

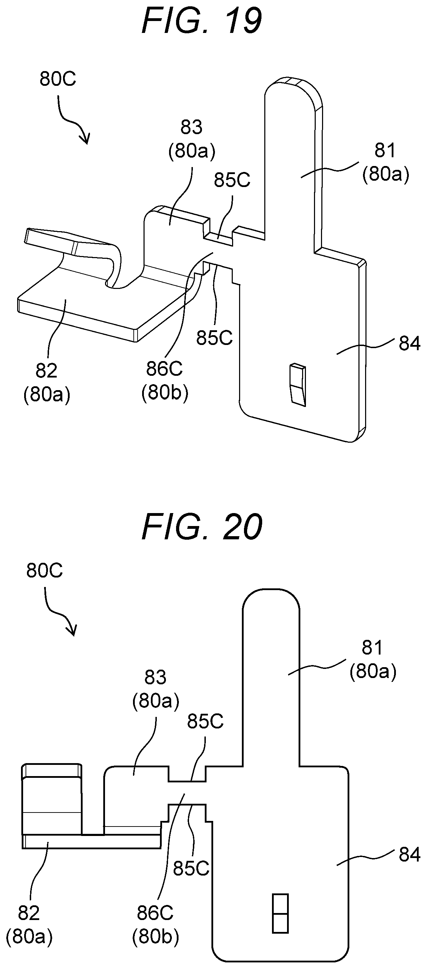

In terminal 80A illustrated in Figs. 9 and 10, cutout 85A formed in main body 83 has a semicircular shape in plan view. However, the present disclosure is not limited to this configuration. Fig. 19 is a perspective view of terminal 80C of Modification 2. Fig. 20 is a front view of terminal 80C of Modification 2. Specifically, as in terminal 80C of Modification 2 illustrated in Figs. 19 and 20, cutout 85C formed in main body 83 may have a rectangular shape in plan view. Similarly to terminal 80A illustrated in Figs. 9 and 10, terminal 80C of the present modification also includes cutout 85C formed by cutting out a part of the outer edge of terminal 80C and narrow part 86C partially narrowed in width by forming cutout 85C. Second portion 80b of terminal 80C is narrow part 86C. In the present modification, since the plan view shape of cutout 85C is rectangular, the plan view shape of narrow part 86 C is rectangular. However, the present disclosure is not limited to this configuration. For example, the plan view shape of cutout 85C may be a polygon such as a triangle, or may be any other shape.

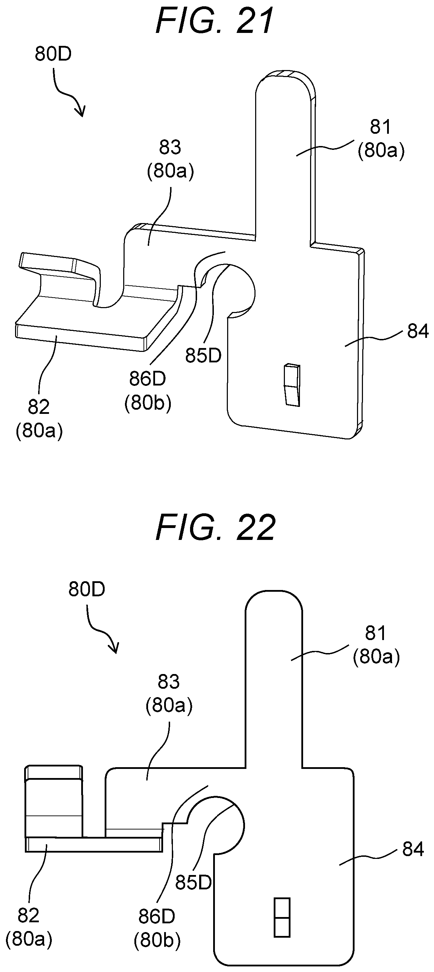

In terminal 80A illustrated in Figs. 9 and 10, narrow part 86A to be second portion 80b is formed by forming two cutouts 85A. However, the present disclosure is not limited to this configuration. Fig. 21 is a perspective view of terminal 80D of Modification 3. Fig. 22 is a front view of terminal 80D of Modification 3. For example, as in terminal 80D of Modification 3 illustrated in Figs. 21 and 22, narrow part 86D to be second portion 80b may be formed by forming one cutout 85D. That is, cutout 85D may be formed only at one end of the outer edge of terminal 80D. In the present modification, cutout 85D is formed so as to gouge the inner corner of the L-shaped portion of terminal 80D. However, the present disclosure is not limited to this configuration. In the present modification, cutout 85D having a cut out circular shape in which a part of a circle is cut out is formed. However, the shape of cutout 85D is not limited to this shape.

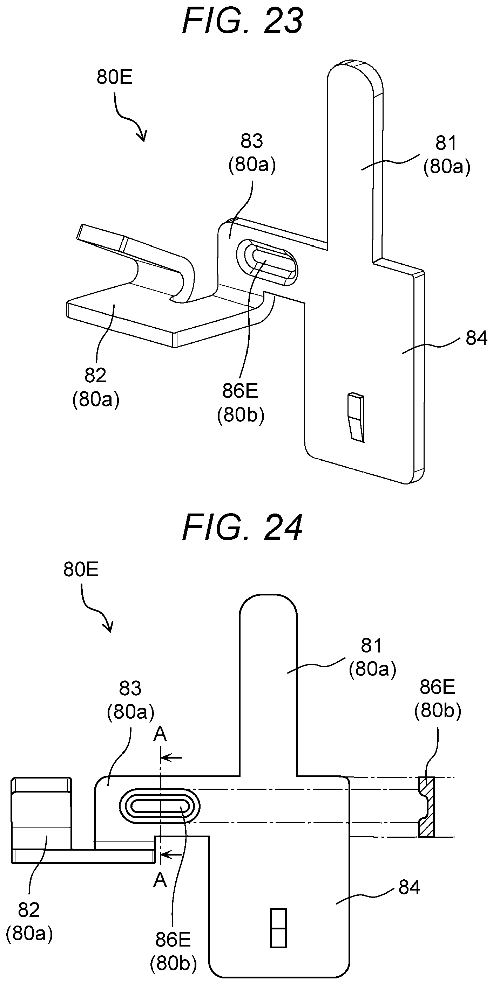

In terminal 80 illustrated in Figs. 7 and 8, second portion 80b is formed by reducing the sectional area of a part of main body 83 by forming through hole 85 penetrating main body 83. However, the present disclosure is not limited to this configuration. Fig. 23 is a perspective view of terminal 80E of Modification 4. Fig. 24 is a front view of terminal 80E of Modification 4. For example, as in terminal 80E of Modification 4 illustrated in Figs. 23 and 24, thin-walled part 86E having a small wall thickness may be formed in main body 83 to reduce a sectional area of a part of main body 83. Thin-walled part 86E is a recess formed by recessing a part of the main surface of main body 83 in the thickness direction. Thin-walled part 86E is a portion thinner than first portion 80a. In the present modification, second portion 80b having Joule heat smaller than that of first portion 80a is thin-walled part 86E. Fig. 24 also illustrates a section taken along line A-A.

In terminal 80E illustrated in Figs. 23 and 24, thin-walled part 86E is formed only on one surface of main body 83.

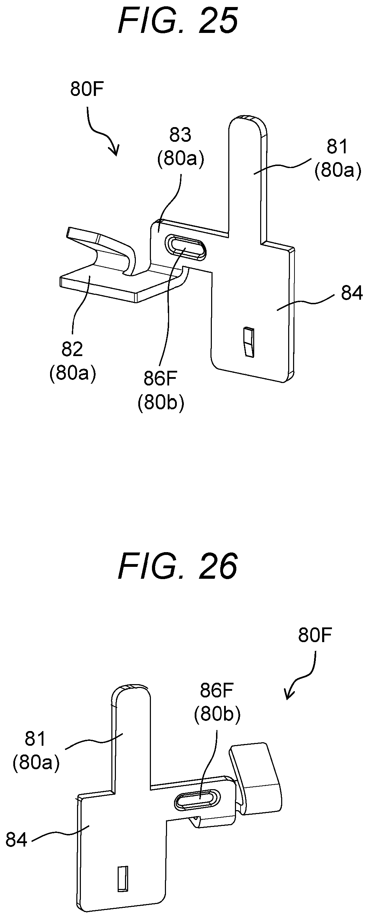

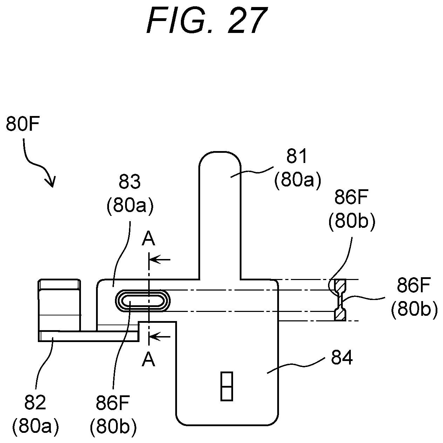

However, the present disclosure is not limited to this configuration. Fig. 25 is a perspective view of a front side of terminal 80F of Modification 5. Fig. 26 is a perspective view of a back side of terminal 80F of Modification 5. Fig. 27 is a front view of terminal 80F of Modification 5. Specifically, as in terminal 80F of Modification 5 illustrated in Figs. 25 to 27, thin-walled part 86F may be formed by hollowing each of both surfaces of main body 83. Also in the present modification, second portion 80b having Joule heat smaller than that of first portion 80a is thin-walled part 86F. Fig. 27 also illustrates a section taken along line A-A.

In terminal 80 illustrated in Figs. 7 and 8, one through hole 85 is formed in main body 83. However, the present disclosure is not limited to this configuration. For example, the terminal may be a terminal in which a plurality of through holes 85 are formed in main body 83. Similarly, in terminal 80A illustrated in Figs. 9 and 10, one set of the pair of cutouts 85A is formed in main body 83. However, the present disclosure is not limited to this configuration. For example, the terminal may be a terminal in which a plurality of pairs of cutouts 85A are formed in main body 83. The terminal may be a terminal in which through hole 85 and cutout 85A are formed in main body 83.

In the above-described exemplary embodiment, terminal 80 is fixed to insulator 13 around which coil 12 is wound. However, the present disclosure is not limited to this configuration. Terminal 80 may be fixed to a member other than insulator 13.

In the above-described exemplary embodiment, terminal 80 includes fixture part 84. However, the present disclosure is not limited to this configuration. Terminal 80 does not have to include fixture part 84. In this case, first connecting part 81 and second connecting part 82 do not have to be formed so as to protrude to a side of main body 83. For example, terminal 80 may be a terminal plate having a modeled shape illustrated in Fig. 13. Terminal 80 may be formed only of main body 83. In this case, a portion where the two electric wires of the first electric wire and the second electric wire are connected can be a part of main body 83.

In the above-described exemplary embodiment, the electric wire constituting coil 12 as the first electric wire is connected to first connecting part 81 of terminal 80, and lead wire 72 as the second electric wire is connected to second connecting part 82 of terminal 80. However, the present disclosure is not limited to this configuration. Specifically, lead wire 72 may be connected to first connecting part 81 of terminal 80 as the first electric wire, and the electric wire constituting coil 12 may be connected to second connecting part 82 of terminal 80 as the second electric wire. That is, one of the first electric wire connected to first connecting part 81 and the second electric wire connected to second connecting part 82 may be an electric wire constituting coil 12, and the other of the first electric wire connected to first connecting part 81 and the second electric wire connected to second connecting part 82 may be lead wire 72 connected to circuit board 70.

In the above-described exemplary embodiment, terminal 80 is inserted into a current path between circuit board 70 and coil 12 to electrically connect circuit board 70 and coil 12. However, the present disclosure is not limited to this configuration. For example, terminal 80 may be inserted into a current path between crossover wires. In this case, coil 12 may be directly connected to the connection terminal part of circuit board 70 without passing through terminal 80. In this manner, terminal 80 only needs to be electrically connected to the electric wire constituting coil 12, and only needs to be able to cut off the current flowing through coil 12 by fusing when an overcurrent flows through coil 12.

In the above-described exemplary embodiment, rotor 20 is an IPM rotor. However, the present disclosure is not limited to this configuration. For example, in the case of using a permanent magnet type rotor as rotor 20, a surface permanent magnet (SPM) rotor in which a plurality of permanent magnets are provided on the outer surface of the rotor core may be used. Rotor 20 may have a configuration in which a bonded magnet is embedded in an embedded hole provided in the rotor core.

In the above-described exemplary embodiment, the number of magnetic poles of rotor 20 is 10 (that is, the number of permanent magnets 23 is 10). However, the present disclosure is not limited to this configuration. Any number can be applied to the number of magnetic poles of rotor 20.

In the above-described exemplary embodiment, the number of slots of stator 10 is 12 (that is, the number of teeth 11b is 12). However, the present disclosure is not limited to this configuration. Any number can be applied to the number of slots of the stator 10 can be applied.

In the above-described exemplary embodiment, the case where the terminal such as terminal 80 is used for stator 10 and motor 1 has been described. However, the present disclosure is not limited to this configuration. The terminal such as terminal 80 is a connection terminal having a fuse function. The terminal such as terminal 80 may be used for an electronic device other than a motor.

The present disclosure includes embodiments which those skilled in the art can obtain by adding various changes to the exemplary embodiment described above, or embodiments implemented by freely combining constitutional elements and functions described in the exemplary embodiment without deviating from the spirit of the present disclosure.

INDUSTRIAL APPLICABILITY

The present disclosure can be applied to motors and the like in various fields including fan motors and the like used in air conditioning devices.

REFERENCE MARKS IN THE DRAWINGS

| | |
|---|---|
| 1 | motor |
| 10 | stator |
| 11 | stator core |
| 11a | yoke |
| 11b | tooth |
| 11b1 | extension |
| 12 | coil |
| 12a | coil end |
| 12b | end part |
| 13 | insulator |
| 14 | slot |
| 20 | rotor |
| 21 | rotary shaft |
| 21a | output shaft |
| 22 | rotor core |
| 22a | magnet insertion hole |
| 23 | permanent magnet |
| 30 | molded resin |
| 31 | lead bush |
| 41 | first bearing |
| 42 | second bearing |
| 51 | first bracket |
| 52 | second bracket |
| 61 | inner metal member |
| 62 | outer metal member |
| 70 | circuit board |
| 71 | electric wire |
| 72 | lead wire |
| 80, 80A, 80B, 80C, 80D, 80E, 80F | terminal |
| 80a | first portion |
| 80b | second portion |
| 80U | first terminal |
| 80V | second terminal |
| 80W | third terminal |
| 81 | first connecting part |
| 82 | second connecting part |
| 83 | main body |
| 84 | fixture part |
| 85, 85B | through hole |
| 85A, 85C, 85D | cutout |
| 86, 86B | branch |
| 86A, 86C, 86D | narrow part |
| 86E, 86F | thin-walled part |

**Claims**

1. A stator comprising:

   a stator core;
   a coil formed by winding an electric wire around the stator core; and
   a terminal electrically connected to the electric wire,
   wherein
   the terminal includes a first portion through which a current flows and a second portion formed by reducing a
   sectional area of a part of the terminal in a direction in which the current flows, and

second Joule heat is larger than first Joule heat, and third Joule heat is smaller than the first Joule heat, where the first Joule heat is Joule heat generated in the electric wire when the current flows through the electric wire, the second Joule heat is Joule heat generated in the first portion when the current flows through the first portion, and the third Joule heat is Joule heat generated in the second portion when the current flows through the second portion.

2. The stator according to Claim 1, wherein
the second portion has a sectional area smaller than a sectional area of the first portion.

3. The stator according to Claim 1, wherein

the terminal includes a branch in which a current path is branched by a through hole formed in the terminal, and
the second portion is the branch.

4. The stator according to Claim 1, wherein

the terminal includes a cutout formed by cutting out a part of an outer edge of the terminal, and a narrow part partially narrowed in width by forming the cutout, and
the second portion is the narrow part.

5. The stator according to Claim 1, wherein

the terminal includes a thin-walled part having a thickness smaller than a thickness of the first portion, and
the second portion is the thin-walled part.

6. The stator according to any one of Claims 1 to 5, wherein
a conductive material constituting the terminal has an electrical conductivity smaller than an electrical conductivity of a conductive material constituting the electric wire.

7. The stator according to any one of Claims 1 to 5, wherein

the terminal includes a first connecting part to which a first electric wire is connected, a second connecting part to which a second electric wire is connected, and a main body serving as a current path between the first connecting part and the second connecting part,
the second portion is a portion of the main body, and
the first portion is a portion other than the second portion in the main body, the first connecting part or the second connecting part.

8. The stator according to Claim 7,

the stator further comprising an insulator having a portion interposed between the stator core and the coil, wherein
the terminal includes a fixture part fixed to the insulator, and
the fixture part is a portion different from the main body.

9. The stator according to Claim 7, wherein
one of the first electric wire and the second electric wire is an electric wire constituting the coil.

10. The stator according to Claim 9, wherein
the other of the first electric wire and the second electric wire is a lead wire connected to a circuit board.

11. A motor comprising:

the stator according to any one of Claims 1 to 5; and
a rotor that rotates with a magnetic force generated in the stator.

# FIG. 1

# FIG. 2

# FIG. 3

# FIG. 4

# FIG. 5

# FIG. 6

# FIG. 7

# FIG. 8

# FIG. 9

80A

83
(80a)

81
(80a)

85A

82
(80a)

86A
(80b)

84

# FIG. 10

80A

81
(80a)

85A

83
(80a)

A

86A
(80b)

A

82
(80a)

85A

86A
(80b)

84

# FIG. 11

# FIG. 12

## FIG. 13

| | COMPARATIVE EXAMPLE | EXAMPLE 1 | EXAMPLE 2 |
|---|---|---|---|
| SHAPE | | (85, 86) | (85A, 86A) |
| EASE OF FUSING (COMPARISON OF JOULE HEAT FOR FUSING) | × / 1.00 | ○ / 0.42 | ○ / 0.42 |
| STIFFNESS (COMPARISON OF DEFORMATION AMOUNT) | ○ / 1.00 | ○ / 0.99 | × / 0.82 |
| WORKABILITY | EASY | EASY | EASY |

## FIG. 14

FIXED

STRESS

# FIG. 15

| SHAPE | DEFORMATION DISTRIBUTION | DEFORMATION AMOUNT [mm] |
|---|---|---|
| COMPARATIVE EXAMPLE | | 0.0333 |
| EXAMPLE 1 | | 0.0335 |
| EXAMPLE 2 | | 0.0404 |

DEFORMATION LARGE

DEFORMATION SMALL

## FIG. 16

COMPARISON OF JOULE HEAT FOR
FUSING BETWEEN ELECTRIC WIRE
AND TERMINAL

φ0.8

ELECTRIC
WIRE

φ0.65

TERMINAL

φ0.5

φ0.25

JOULE HEAT
FOR FUSING
[KJ]

SECTIONAL AREA [mm²]

EP 4 625 773 A1

# FIG. 17

80B

83
(80a)

81
(80a)

84

82
(80a)

85B

86B
(80b)

# FIG. 18

80B

83
(80a)

81
(80a)

84

82
(80a)

85B

86B
(80b)

## FIG. 19

## FIG. 20

## FIG. 21

## FIG. 22

## FIG. 23

## FIG. 24

## FIG. 25

## FIG. 26

# FIG. 27

80F

83
(80a)

81
(80a)

86F
(80b)

A

82
(80a)

86F
(80b)

A

86F
(80b)

86F
(80b)

84

## INTERNATIONAL SEARCH REPORT

| International application No. |
|---|
| **PCT/JP2023/035257** |

| A. | CLASSIFICATION OF SUBJECT MATTER |
|---|---|

*H02K 3/46*(2006.01)i; *H02K 11/20*(2016.01)i
FI:  H02K3/46 C; H02K11/20

According to International Patent Classification (IPC) or to both national classification and IPC

| B. | FIELDS SEARCHED |
|---|---|

Minimum documentation searched (classification system followed by classification symbols)

H02K3/46; H02K11/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2020/049631 A1 (MITSUBISHI ELECTRIC CORP) 12 March 2020 (2020-03-12) paragraphs [0011]-[0015], fig. 1-3 | 1-11 |
| Y | Microfilm of the specification and drawings annexed to the request of Japanese Utility Model Application No. 011269/1981 (Laid-open No. 124981/1982) (HINO MOTORS, LTD.) 04 August 1982 (1982-08-04) specification, p. 3, line 7 to p. 4, line 2, fig. 1 | 1-11 |
| Y | JP 2022-058731 A (VEHICLE ENERGY JAPAN INC.) 12 April 2022 (2022-04-12) paragraphs [0037]-[0043], fig. 5-9 | 3-11 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 December 2023** | **19 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/035257**

| Patent document cited in search report | Publication date (day/month/year) | Patent family member(s) | Publication date (day/month/year) |
|---|---|---|---|
| WO 2020/049631 A1 | 12 March 2020 | (Family: none) | |
| JP 57-124981 U1 | 04 August 1982 | (Family: none) | |
| JP 2022-058731 A | 12 April 2022 | US 2020/0321589 A1 paragraphs [0051]-[0057], fig. 5-9 WO 2019/069837 A1 EP 3694024 A1 CN 111164795 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018150845 A